# EUROPÄISCHE PATENTANMELDUNG

(11) **EP 1 908 741 A2**
(43) Veröffentlichungstag der Anmeldung: **09.04.2008**
(21) Anmeldenummer: 07019592.0
(22) Anmeldetag: 06.10.2007
(51) Int. Cl.: C05F 11/00, A01G 1/04, A01G 13/02

(54) **Kultursubstrat aus organischen, faserigen Material**

(30) Priorität: 06.10.2006 DE 102006047570; 07.07.2007 DE 102007031783
(71) Anmelder: Weingut Schloss Proschwitz Prinz zur Lippe, 01665 Zadel über Meissen (DE); Asch, Uwe, 02906 Hohendubrau/OT Gross-Saubernitz (DE)
(72) Erfinder: Asch, Uwe, 02906 Hohendubrau/OT Gross-Saubernitz (DE); Prinz zur Lippe, Georg, Dr., 01665 Zadel über Meissen (DE)
(74) Vertreter: Kaufmann, Sigfrid

(57) **Zusammenfassung**

Die Erfindung betrifft ein mit Dünger versehenes Kultursubstrat aus gepresstem Miscanthus und seine Verwendung als Mulchsubstrat zur Bodenabdeckung und als Substrat für die Pilzzucht. Aufgabe der Erfindung ist es, die wirtschaftlich vorteilhafte Verwendung von Miscanthus zu ermöglichen; insbesondere soll zum einen die Schüttdichte eines Kultursubstrates aus Miscanthus nachhaltig erhöht und zum anderen ein sparsamer Einsatz des Miscanthus ermöglicht werden. Das erfindungsgemäße Kultursubstrat besteht entweder aus kleinen Stücken, nämlich aus zylinderförmigen, kugelförmigen oder vieleckigen Pellets, oder aus vergleichsweise großflächigen Platten, vorzugsweise kreisrunden Scheiben, die gänzlich oder überwiegend aus Miscanthus bestehen. Für die Verwendung als Mulchmaterial und Substrat für die Pilzzucht reicht es aus, dass die auf dem Boden aufzubringende Schicht Miscanthus eine Dicke von 2 cm aufweist, da das Miscanthus bei Feuchtigkeitseinwirkungen auf das 3 bis 4fache Volumen aufquillt und eine geschlossene Substratschicht bilden, die die Feuchtigkeit sehr gut speichert.

## Beschreibung

Die Erfindung betrifft ein Kultursubstrat aus Miscanthus und seine Verwendung als Mulchsubstrat zur Bodenabdeckung und als Substrat für die Pilzzucht.

Seit langem wird im Gartenbau Torf als Kultursubstrat verwendet. In letzter Zeit besteht das Problem, die Moore zu erhalten, sodass nach Alternativen für den Ersatz von Torf gesucht wurde, zumal Torf, da er praktisch keine Pflanzennährstoffe enthält, kein Dünger ist und auch sonst neben den positiven Wirkungen, wie z. B. die Bodenstrukturverbesserung, weitere Nachteile wie geringes Wasserspeicherungsvermögen, leichte Austrocknung des Torfes bei Abdeckung des Bodens und einen sehr niedrigen pH-Wert, der zur Versauerung des Bodens führt, aufweist. In Folge dessen wurden eine Reihe von Torfersatzprodukten entwickelt (vgl. z. B. DE 44 01 278 C2).

Bezüglich der Bodenabdeckung haben sich zwischenzeitlich verschiedene Mulchsubstrate aus pflanzlichen Reststoffen im Garten- und Landschaftsbau sowie für Reihenkulturen durchgesetzt. Als Mulchen bezeichnet man eine spezielle Technik, die man im Garten und Gartenbau, in Parks und beim Obstbau derart verwendet, dass der offene Boden zwischen Gemüsepflanzen, Blumen, Stauden, Sträuchern und Bäumen mit organischem Material abdeckt wird.

Die eingesetzten Mulchsubstrate bewirken eine Unterdrückung von Samenunkräutern, Verringerung des Pflegeaufwandes, gleichmäßige Bodenfeuchte, Verringerung der Temperaturschwankungen des Bodens, Erosionsminderung, eine gewisse Nährstoffnachlieferung sowie die Abwehr von Schnecken und anderen tierischen Schädlingen.

Vorrangig kommt in Humus- und Erdenwerken zu Rindenmulch aufbereitet Holzrinde zur Anwendung. Aber auch gehäckseltes Stroh, Hanfschäben und Abfallkomposte eignen sich dafür. In Staudenbeeten, unter Sträuchern und Bäumen setzt man vorwiegend zerkleinerte Baumrinde ein, wogegen in Gemüsekulturen und unter Topf- und Containerpflanzen auch verschiedene Typen von Kunststofffolien verwendet werden.

Seit einigen Jahren ist auch die Verwendung von Miscanthus als Mulchmaterial im Gemüse- und Obstanbau sowie im Landschaftsbau bekannt, so z. B. durch die Studie "Chinaschilfhäcksel als Mulchsubstrat zur Bodenabdeckung" der Landesanstalt für Pflanzenbau Forschheim aus dem Jahre 2000, die Miscanthus als sehr gut geeignetes Mulchmaterial, für das Wachstum von Kopfsalat feststellte (www.lap-forschheim.de). Neuerdings sind die Ergebnisse weiterer Feldversuche, die die Verwendung von Miscanthus als Mulchauflage bei jungen Apfelbäumen beschreibt, veröffentlicht (in der Beeck, C.; Pude, R.; Blanke, M.: Organischer Mulch erhält Bodenfeuchte. Diplomarbeit, Universität Bonn 2006).

Es hat sich gezeigt, dass gehäckseltes Miscanthus tatsächlich zu einer im Vergleich zu den bislang eingesetzten Mulchmaterialien erhöhten Bodenaktivität (Bodenatem) führt und überproportional zum Erhalt der Bodenfeuchte, der Verminderung der Stickstoffmineralisierung sowie zur erhöhten Calciumaufnahme und zu einer Herbizitwirkung beiträgt. Dennoch ist festzustellen, dass Miscanthus nach wie vor relativ selten verwendet wird und auch die diesbezüglichen Zuwachsraten in der Vergangenheit gering waren.

Ursächlich hierfür ist vorrangig die sehr geringe Schüttdichte der Miscanthushäcksel, die nur ca. 140 kg/srm beträgt und damit nicht einmal ein Drittel der Schüttdichte von Rindenmulch (ca. 450 kg/srm) erreicht. Die daraus resultierenden deutlich höheren Lager- und Transportaufwendungen negieren damit die Vorteile des Miscanthus.

Zudem hat es sich gezeigt, dass die alleinige Verwendung von Miscanthus als Kultursubstrat modernen, gezielt "gezüchteten" Substraten infolge des vergleichsweise geringen Nährstoffgehaltes unterlegen ist.

Aufgabe der Erfindung ist es, diesen Nachteil des Standes der Technik zu beseitigen. Hierzu soll der Miscanthus in einer solchen Form vorliegen, dass er sich einerseits durch eine wesentlich erhöhte Schüttdichte auszeichnet und zum anderen bei seiner Verwendung als Mulch mit vergleichsweise geringer Schichtdicke auskommt. Daraus folgend soll der Flächenbedarf klein sein. Schließlich soll die erfindungsgemäße Struktur des Kultursubstrates zu verbesserten bzw. neuartigen Verwendungen von Miscanthus führen.

Diese Aufgabe der Erfindung wird durch die Merkmale des Patentanspruches 1 gelöst; zweckmäßige Ausgestaltungen des Kultursubstrates zeigen die Ansprüche 2 bis 9 auf.

Nach Maßgabe der Erfindung ist vorgesehen, ein Kultursubstrat aus faserigem Material als Mulchmaterial für offene Böden zwischen Gemüsepflanzen, Blumen, Stauden, Sträuchern und Bäumen und/oder als Substrat für die Pilzzucht zu verwenden, das gänzlich oder überwiegend aus gepresstem Miscanthus besteht und einen oder mehrere mineralische und/oder organische Dünger enthält.

Eine vorteilhafte Herstellung des Substrates besteht darin, es zu zylindrischen Pellets auszuformen und dabei die Faserstruktur des Miscanthus zu erhalten. So kommt der entscheidende Vorteil des Miscanthussubstrates, nämlich dass es bei Feuchtigkeitseinwirkung auf das 3 bis 4fache des ursprünglichen Volumens aufquellt und hierbei eine geschlossene Substratschicht bilden, voll zum Tragen. Damit, aber auch bezüglich des Nährstoffeintrages in den Boden, verhalten sich die Miscanthuspellets wie ein Konzentrat der bislang nur versuchsweise als Mulch eingesetzten Minscanthushäcksel. Zudem konnte festgestellt werden, dass der Stoffeintrag in den Boden wesentlich schneller erfolgt.

Im Gegensatz zum Stand der Technik wird bei dieser Variante das Miscanthus bei der Herstellung der zylinderförmigen Miscanthuspellets weder gehäckselt, zerfasert oder - wie bisher bei der Herstellung von Miscanthuspellets - feinkörnig gemahlen; vielmehr wird eine Technologie genutzt, die es ermöglicht, die natürliche Strukturierung des Miscanthus weitgehend zu erhalten. In gleicher Weise wird vorgegangen, wenn die Pellets aus einer Mischung von Miscanthus und anderem Material, etwa Stroh, besteht. Ein bevorzugtes Mischungsverhältnis ist z. B. 70 % Miscanthus zu 30 % Stroh. In jedem Fall ist in den bevorzugt 6 bis 10 mm dicken und bis zu 20 mm langen Pellets die Faserstruktur des Miscanthus der natürlichen Strukturierung angelehnt, d. h. die Fasern liegen vorwiegend in Längsrichtung der zylinderförmigen Pellets.

Es liegt auch im Wesen der Erfindung, dass in konventioneller Weise gepresstes Miscanthus verwendet wird.

Die Dimensionierung der Pellets ist erfindungsgemäß so gewählt, dass das Kultursubstrat eine Schüttdichte von ca. 700 kg/srm aufweist. Diese liegt nunmehr sehr deutlich über die bislang für die Bodenabdeckung meist favorisierten Rindenmulch. Folglich sind die Lager- und Transportkosten vergleichsweise geringer. Damit können die o. g. Vorteile des Miscanthus wirtschaftlich vorteilhaft durchdringen.

Hinzu kommt, dass die mit den Pellets geschlossene Mulchschicht in ihrer Konsistenz sehr dem Waldboden ähnelt. Das Kultursubstrat aus Miscanthuspellets beseitigt nicht nur die Nachteile des gehäckselten Miscanthus-Mulchsubstrates, sondern es bietet sich damit auch als Substrat für die Pilzzucht an. Gerade hier ist es vorteilhaft, dass die obere Schicht des auf dem Boden aufgebrachten MiscanthusSubstrates relativ schnell verhärtet und somit dem Austrocknen des Substrates entgegen wirkt. Andererseits wird wie gewünscht Feuchtigkeit sofort und vollständig aufgenommen.

Es wurde aber auch gefunden, dass mit kugelförmigen Pellets und vieleckigen Substratstücken aus Miscanthus, wenn deren Abmessungen nicht über 5 mm hinausgehen, praktisch annähernd die gleichen, oben beschriebenen Vorteile bei der Verwendung als Mulchsubstrat und als Substrat für die Pilzzucht erreicht werden.

Zudem ist es erfindungsgemäß vorgesehen, dass das Kultursubstrat als plattenförmigen Körper, vorzugsweise als kreisrunde Scheibe, ausgeformt ist. Dabei hat der platten- bzw. scheibenförmige Körper eine vom Rand bis zur Mitte reichende schlitzförmige Aussparung und eine zentrische Aussparung, die es ermöglichen, den Körper eng und nahezu vollständig bodenbedeckend um eine Kulturpflanze zu legen.

Eine solche Ausgestaltung der Erfindung ermöglicht es, das Kultursubstrat sparsam, aber dennoch dem Bestimmungszweck entsprechend effektiv einzusetzen. Gegenüber der losen Aufschüttung kleinstückigen Kultursubstrats können somit die Material- und Arbeitskosten nachhaltig reduziert werden.

Die Verwendung der erfindungsgemäßen Miscanthusplatten bietet sich beispielsweise in besonders vorteilhafter Weise beim Weinanbau an, zumal hier kleinstückiges Miscanthus maschinell nur unverhältnismäßig aufwändig zielgenau ausgestreut werden kann.

Des Weiteren sind die Miscanthusplatten/-scheiben aufgrund der Stapelbarkeit kostengünstig zu lagern und zu transportieren; das Handling ist zudem einfach.

Obgleich die Anregung, Miscanthus als Kultursubstrat, nämlich als Mulchsubstrat, zu verwenden, seit geraumer Zeit bekannt ist, zeigt sich, dass erst mit der Beseitigung der aufgezeigten Nachteile ein wirtschaftlicher, mit erheblichen Vorteilen verbundener Einsatz des Miscanthus möglich ist.

In dem Kultursubstrat gemäß der Erfindung wird der Anteil des Düngers vom speziellen Verwendungszweck bestimmt. Als organische Dünger kommen Mist, Guano, kompostierte Pflanzenreste, Klärdünger, Blutmehl, Fischmehl, Knochenmehl, Hornspäne, Harnstoff oder abgepresste Gärreste aus Biogasanlagen zum Einsatz.

Die Miscanthusplatten/-scheiben können auch im Nachhinein mit Dünger "geimpft" werden.

Nachfolgend wird die Erfindung anhand zweier Erfindungsbeispiele näher erläutert.

Sowohl bei der Verwendung des kleinstückigen Kultursubstrates als Mulchmaterial als auch als Substrat für die Pilzzucht reicht es aus, die aufzubringende Schicht Miscanthuspellets auf eine Dicke von ca. 2 cm zu beschränken. Der Flächenbedarf für 1 m² beträgt damit 10 kg. Bei Feuchtigkeitseinwirkungen bildet sich eine geschlossene Mulch-/Substratschicht von 6 bis 8 cm Dicke, was den üblichen Anforderungen an Mulch- und Pilzzuchtsubstrat sehr gut entspricht. In das Kultursubstrat ist, beispielsweise mit 5 Vol.%, ein organischer Dünger, nämlich abgepresste Gärreste aus Biogasanlagen eingebracht.

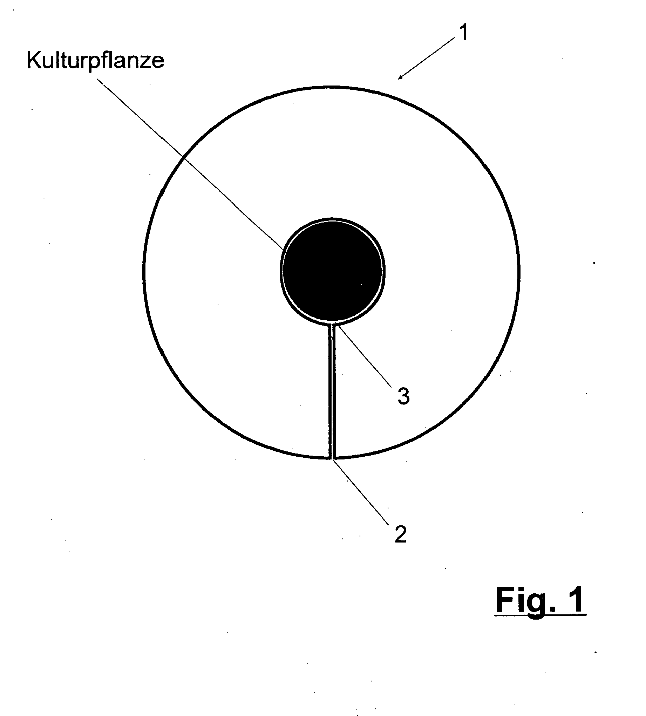

Alternativ ist das Miscanthus-Kultursubstrat als Platte oder Scheibe ausgeführt. In diesem Fall ist es bevorzugt scheibenförmig ausgestaltet (vgl. Fig. 1).

Die Miscanthusscheibe 1 hat die vom Rand bis zur Mitte reichende schlitzförmige Aussparung 2. Die zentrische Aussparung 3 ermöglicht es, das Substrat eng und nahezu vollständig bodendeckend um die Kulturpflanze, z.B. eine Weinrebe, zu legen. Die Dicke der Scheibe beträgt 2 cm, ihr Durchmesser 30 cm.

## Patentansprüche

1. Kultursubstrat aus organischem, faserigem Material, das als Mulchmaterial für offene Böden zwischen Gemüsepflanzen, Blumen, Stauden, Sträuchern, Reben und Bäumen und/oder als Substrat für die Pilzzucht verwendet wird, **dadurch gekennzeichnet, dass** es gänzlich oder überwiegend aus gepresstem Miscanthus besteht und einen oder mehrere mineralische und/oder organische Dünger enthält.

2. Kultursubstrat nach Anspruch 1, **dadurch gekennzeichnet, dass** das faserige Material aus Miscanthus und Stroh besteht.

3. Kultursubstrat nach Anspruch 1 und 2, **dadurch gekennzeichnet, dass** es kleinstückig als zylindrische Pellets, kugelförmigen Pellets und/oder als Vielecke ausgeformt ist.

4. Kultursubstrat nach einem der vorstehenden Ansprüche, **dadurch gekennzeichnet, dass** die zylindrischen Pellets einen Durchmesser von 6 bis 10 mm aufweisen und bis zu 20 mm lang sind, die kugelförmigen Pellets einen Durchmesser von maximal 5 mm und die vieleckigen Substratstücke eine Kantenlänge von maximal 5 mm aufweisen.

5. Kultursubstrat nach Anspruch 1 und 2, **dadurch gekennzeichnet, dass** es als plattenförmiger Körper (1) ausgeformt ist.

6. Kultursubstrat nach Anspruch 5, **dadurch gekennzeichnet, dass** es als kreisrunde Scheibe (1) ausgeformt ist.

7. Kultursubstrat nach einem der Ansprüche 5 und 6, **dadurch gekennzeichnet, dass** der platten- bzw. scheibenförmige Körper (1) eine vom Rand bis zur Mitte reichende schlitzförmige Aussparung (2) und eine zentrische Aussparung (3) aufweist, die es ermöglichen, den Körper (1) eng und nahezu vollständig bodenbedeckend um eine Kulturpflanze zu legen.

8. Kultursubstrat nach einem der Ansprüche 5 bis 7, **dadurch gekennzeichnet, dass** die Dicke des platten- bzw. scheibenförmigen Körpers (1) mindestens 1 cm und die minimale äußere Abmessung 20 cm beträgt.

9. Kultursubstrat nach Anspruch 1 bis 8, **dadurch gekennzeichnet, dass** die organischen Dünger Mist, Guano, kompostierte Pflanzenreste, Klärdünger, Blutmehl, Fischmehl, Knochenmehl, Hornspäne, Harnstoff oder abgepresste Gärreste aus Biogasanlagen sind.
